# EUROPEAN PATENT APPLICATION

(11) **EP 4 624 675 A1**
(43) Date of publication of application: **01.10.2025**
(21) Application number: 24165744.4
(22) Date of filing: 25.03.2024
(51) Int. Cl.: E02F 9/08, E02F 9/20, E02F 9/24

(54) **WORKING MACHINE**

(71) Applicant: Yanmar Holdings Co., Ltd., Osaka-shi, Osaka 530-8311 (JP)
(72) Inventor: Inès, Achchaq, Saint-Dizier (FR)
(74) Representative: Sekiguchi, Kazuya

(57) **Abstract**

[Problem] To reduce a risk that a cable is unplugged by a third party without the knowledge of a worker while a battery unit is being charged.

[Solution] A working machine uses electric power of a battery unit as a driving source. The working machine includes: a charging connector to which a cable for charging the battery unit is to be connected; a switch for releasing lock applied when the charging connector is connected to the cable; a machine room that houses the battery unit, the charging connector, and the switch; and a cover that has a cutout part, and is openable and closable with respect to the machine room. The cover exposes the charging connector to outside through the cutout part while covering the switch in a lockably closed state.

## Description

### TECHNICAL FIELD

The present invention relates to a working machine such as an electric hydraulic excavator.

### BACKGROUND ART

Conventionally, an electric hydraulic excavator including a battery unit is known. For example, the electric hydraulic excavator in Patent Document 1 includes an exterior cover that covers the battery unit and a charging port on a base plate. The exterior cover has an opening and closing part. The opening and closing part opens and closes between a closed position which blocks the charging port from the outside, and an open position which exposes the charging port to the outside.

### PRIOR ART DOCUMENT

### PATENT DOCUMENT

Patent Document 1: Specification of German Patent Application Publication No. 112019000005

### SUMMARY OF INVENTION

### TECHNICAL PROBLEM

When charging the battery unit, a cable is connected to a charging connector. During charging, a worker (e.g., an operator) is often away from the electric hydraulic excavator. In a configuration of Patent Document 1, the opening and closing part is located at the open position during charging. Therefore, there is a risk that the cable may be unplugged from the charging port of the charging connector by a third party without the knowledge of the worker during charging.

The present invention has been made in order to solve the above problem, and an object thereof is to provide a working machine capable of reducing a risk that a cable is unplugged by a third party without the knowledge of a worker while a battery unit is being charged.

### SOLUTION TO PROBLEM

A working machine according to an aspect of the present invention is a working machine that uses electric power of a battery unit as a driving source, and includes: a charging connector to which a cable for charging the battery unit is to be connected; a switch for releasing lock applied when the charging connector is connected to the cable; a machine room that houses the battery unit, the charging connector, and the switch; and a cover that has a cutout part, and is openable and closable with respect to the machine room, wherein the cover exposes the charging connector to outside through the cutout part while covering the switch in a lockably closed state.

### ADVANTAGEOUS EFFECTS OF INVENTION

It is possible to reduce a risk that a cable is unplugged by a third party without the knowledge of a worker while a battery unit is being charged.

### BRIEF DESCRIPTION OF DRAWINGS

FIG. 1 is a side view illustrating a schematic configuration of a hydraulic excavator which is an example of an electric working machine according to an embodiment of the present invention.
FIG. 2 is a block diagram schematically illustrating a configuration of an electrical system and a hydraulic system of the hydraulic excavator.
FIG. 3 is a rear view of a machine room of an upper turning body provided in the hydraulic excavator.
FIG. 4 is a rear view of the machine room with a cover open.
FIG. 5 is a perspective view of the machine room with the cover open.
FIG. 6 is a perspective view illustrating a state in which a first charging connector, a second charging connector, a charging stop switch, and a rubber sheet are held together with a bracket.
FIG. 7 is an exploded perspective view of the first charging connector, the second charging connector, the charging stop switch, the bracket, and the rubber sheet.
FIG. 8 is a rear view of the cover seen from the back of a machine body.
FIG. 9 is a rear view of the machine room when normal charging is performed by connecting a first cable to the first charging connector with the cover closed.
FIG. 10 is a rear view of the machine room when the cover is opened after the normal charging is completed.
FIG. 11 is a perspective view of the machine room when the cover is opened and a second cable is connected to the second charging connector.
FIG. 12 is a rear view of the machine room when the cover is closed to perform quick charging after the second cable is connected to the second charging connector.
FIG. 13 is a rear view of the cover in a closed state, in a state in which the rubber sheet and the first charging connector are not illustrated.

### DESCRIPTION OF EMBODIMENTS

An embodiment of the present invention will be described as follows with reference to the drawings.

### 1. Working Machine

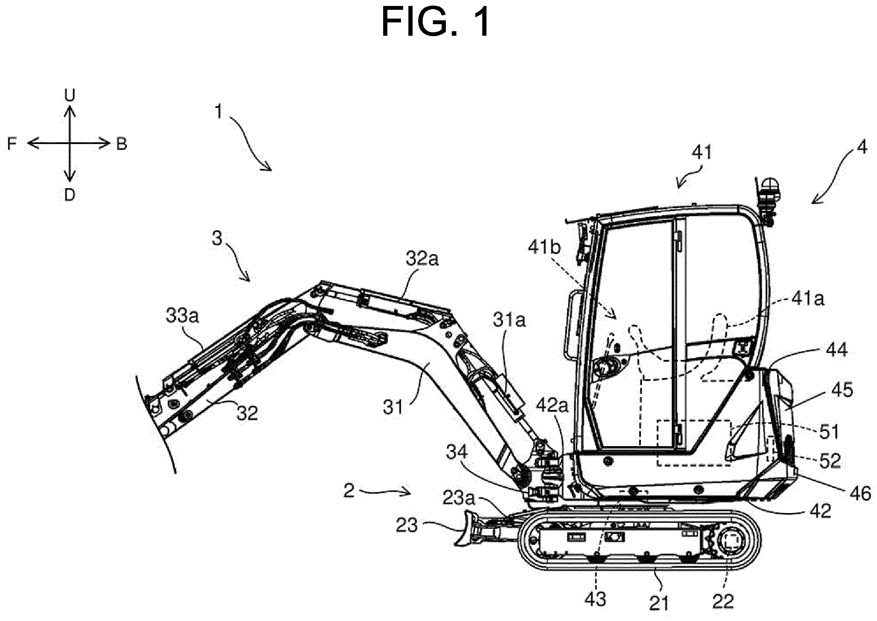

FIG. 1 is a side view illustrating a schematic configuration of a hydraulic excavator (electric excavator) 1 which is an example of an electric working machine of this embodiment. The hydraulic excavator 1 includes a lower traveling body 2, a working machine 3, and an upper turning body 4. In the following, the upper turning body 4 may be referred to as a "machine body".

Herein, the direction will be defined as follows. The direction in which an operator (pilot, driver) seated in a driver's seat 41a of the upper turning body 4 faces forward is defined as the front, and the opposite direction is defined as the back. Therefore, in a state in which the upper turning body 4 is not turned with respect to the lower traveling body 2 (turning angle 0°), the front-back direction of the upper turning body 4 coincides with the direction in which the lower traveling body 2 moves forward and backward. The left side viewed from the operator seated in the driver's seat 41a is defined as the "left" and the right side is defined as the "right". Furthermore, the gravity direction perpendicular to the front-back direction and the left-right direction is defined as the up-down direction, the upstream side in the gravity direction is defined as "up", and the downstream side is defined as "down". In the drawing, the hydraulic excavator 1 is illustrated in a state in which the upper turning body 4 is not rotated with respect to the lower traveling body 2. In addition, in the drawings, the front is indicated by symbol "F", the rear is indicated by symbol "B", the left s indicated by symbol "L", the right s indicated by symbol "R", the upper side is indicated by symbol "U", and the lower side is indicated by symbol "D".

The lower traveling body 2 includes a pair of left and right crawlers 21 and a pair of left and right travel motors 22. Each travel motor 22 is a hydraulic motor. The left and right travel motors 22 drive the left and right crawlers 21, respectively, so that it is possible to move the hydraulic excavator 1 forward and backward. The lower traveling body 2 further includes a blade 23 for leveling the ground, and a blade cylinder 23a for rotating the blade 23 in the up-down direction.

The working machine 3 includes a boom 31, an arm 32, and a bucket (not illustrated). By driving the boom 31, the arm 32, and the bucket independently, excavation work for soil and sand can be performed.

The boom 31, the arm 32, and the bucket are driven by a boom cylinder 31a, an arm cylinder 32a, and a bucket cylinder 33a, respectively. The boom cylinder 31a, the arm cylinder 32a, and the bucket cylinder 33a are composed of hydraulic cylinders.

A base end of the boom 31, that is, an end of the boom 31, which is opposite to the side connected to arm 32, is swingably connected to a leading end 42a of the turning frame 42 via a boom bracket 34. In other words, the hydraulic excavator 1 of this embodiment has a boom swing function in which the boom 31 swings left and right from the leading end 42a. The turning frame 42 is provided with a swing cylinder (not illustrated). The swing cylinder is a hydraulic cylinder for swinging the boom 31.

The boom 31 has such a shape as to be bent forward at an obtuse angle, and is rotated in the up-down direction by the expansion and contraction of the boom cylinder 31a. The boom cylinder 31a is located on the rear side (bask side) with respect to the boom 31. The boom cylinder 31a has a base end supported by the boom bracket 34, and a leading end connected to a bent part of the boom 31, so that the boom cylinder 31a is movable freely in an expansion and contraction manner. The arm 32 is rotatably connected to the leading end of the boom 31. The arm 32 is rotated in the up-down direction by expansion and contraction of the arm cylinder 32a. The arm cylinder 32a has a base end supported by the boom 31, and a leading end connected to a base end of an arm 32, so that the arm cylinder 32a is movable freely in an expansion and contraction manner. The bucket is connected to the leading end of the arm 32 via a link mechanism (not illustrated), and is rotated in the up-down direction by the expansion and contraction of the bucket cylinder 33a. The bucket cylinder 33a has a base end supported by the arm 32, and a leading end connected to the link mechanism, so that the bucket cylinder 33a is expanded and contracted.

The upper turning body 4 is located above the lower traveling body 2 and is provided so as to be able to turn with respect to the lower traveling body 2. A driving part 41, the turning frame 42, a turning motor 43, and a machine room 44 are disposed in the upper turning body 4. The upper turning body 4 is driven by the turning motor 43, which is a hydraulic motor, to turn via a turning bearing (not illustrated).

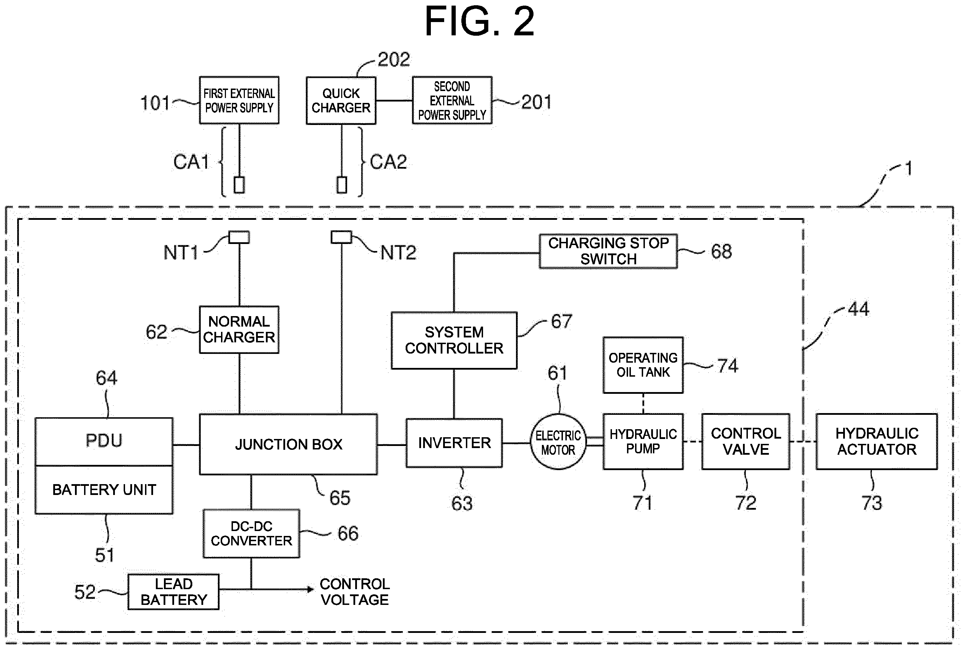

The driver's seat 41a is disposed in the driving part 41. Various control levers 41b are disposed around the driver's seat 41a. An operator sits on the driver's seat 41a and operates the control levers 41b, so that a hydraulic actuator 73 (see FIG. 2), which will be described later, is driven. This enables the lower traveling body 2 to travel, enables the working machine 3 to perform excavation work, and enables the upper turning body 4 to rotate.

The battery unit 51 is disposed in the upper turning body 4. The battery unit 51 is composed of, for example, a lithium-ion battery unit. The battery unit 51 stores electric power and supplies electric power to an electric motor 61 (see FIG. 2) to drive the electric motor 61. In other words, the hydraulic excavator 1 of this embodiment uses the electric power of the battery unit 51 as a driving source.

A lead battery 52 is also disposed in the upper turning body 4. The lead battery 52 outputs a low voltage (e.g., 12 V) DC voltage. The output from the lead battery 52 is supplied as a control voltage to, for example, a system controller 67 (see FIG. 2).

The hydraulic excavator 1 may have a configuration that uses a combination of a hydraulic equipment such as a hydraulic actuator (for example, a hydraulic motor, a hydraulic cylinder), and an actuator driven by electric power. Examples of actuators driven by electric power include an electric travel motor, an electric cylinder, and an electric turning motor.

### 2. Configuration of Electrical System and Hydraulic System

FIG. 2 is a block diagram schematically illustrating a configuration of an electrical system and a hydraulic system of the hydraulic excavator 1. For convenience, in this figure, a path through which a current or an electrical signal flows is illustrated as a solid line, and a path through which hydraulic fluid flows is illustrated as a broken line.

The hydraulic excavator 1 includes the electric motor 61, a normal charger 62, an inverter 63, a power distribution unit (PDU) 64, a junction box 65, a DC-DC converter 66, and the system controller 67 in the machine room 44. The system controller 67 is composed of an electronic control unit, also referred to as an ECU (Electronic Control Unit), and performs electrical control of each part of the hydraulic excavator 1.

The electric motor 61 is driven by electric power supplied from the battery unit 51 via the junction box 65 and the inverter 63. The electric motor 61 is composed of a permanent magnet motor or an induction motor.

The normal charger 62 (also referred to as a power feeder) converts an AC voltage supplied from a first external power supply 101 as an external power supply via a first cable CA1 into a DC voltage. Herein, inside the machine room 44, a first charging connector NT1 which is an example of a charging connector is disposed. The first charging connector NT1 is a connector (also referred to as a socket) for normal charging.

By connecting the first cable CA1 to the first charging connector NT1, an AC voltage from first external power supply 101 is supplied to the normal charger 62 via the first cable CA1 and the first charging connector NT1. The voltage (DC voltage) output from the normal charger 62 is supplied to the battery unit 51 via the junction box 65 and the PDU 64. Consequently, the battery unit 51 is charged. Charging of the battery unit 51 at this time is referred to as normal charging.

Thus, the hydraulic excavator 1 of this embodiment includes a charging connector (first charging connector NT1) to which a cable (first cable CA1) for charging the battery unit 51 is connected.

A second charging connector NT2 is also disposed inside the machine room 44. The second charging connector NT2 is a connector (socket) for quick charging. An AC voltage supplied from a second external power supply 201 for quick charging is converted to a DC voltage by a quick charger 202. A base end of a second cable CA2 is connected to the quick charger 202.

A leading end of the second cable CA2 is connected to the second charging connector NT2, so that a DC voltage from the quick charger 202 is supplied to the battery unit 51 via the second cable CA2, the second charging connector NT2, the junction box 65, and the PDU 64. Consequently, the battery unit 51 is charged. Charging of the battery unit 51 at this time is referred to as quick charging.

In this embodiment, the first cable CA1 collectively refers to a wiring part where an electrical wire extends and a plug (a part inserted into the first charging connector NT1) provided at a tip of the wiring part. Like the first cable CA1, the second cable CA2 also refers to the wiring part and the plug together.

The inverter 63 converts a DC voltage supplied from the battery unit 51 into an AC voltage and supplies the AC voltage to the electric motor 61. Consequently, the electric motor 61 is rotated. The supply of the AC voltage (current) from the inverter 63 to the electric motor 61 is performed on the basis of a rotation command output from the system controller 67.

The PDU 64 is a battery control unit that controls the input and output of the battery unit 51 by controlling an internal battery relay. The junction box 65 includes a charger relay, an inverter relay, fuses, and the like. The voltage output from the battery unit 51 is supplied to the inverter 63 via the PDU 64 and the junction box 65.

The DC-DC converter 66 steps down a high voltage (e.g., 300 V) DC voltage supplied from the battery unit 51 via the PDU 64 and the junction box 65 to a low voltage (e.g., 12 V). The voltage output from the DC-DC converter 66 is supplied to the system controller 67 or the like in the same manner as the output from the lead battery 52.

Inside the machine room 44, a charging stop switch 68 is provided. When the first cable CA1 is connected to the first charging connector NT1 in order to perform normal charging, a mechanical lock is applied in order to prevent the first cable CA1 from detaching from the first charging connector NT1. This lock is also referred to as interlock. In other words, the first charging connector NT1 has an interlock mechanism. When an operator operates (for example, presses) the charging stop switch 68, the above lock is released. Therefore, when the normal charging is completed, the operator operates the charging stop switch 68 to release the above lock, and then unplugs the first cable CA1 from the first charging connector NT1.

When the charging stop switch 68 is operated, the system controller 67 controls the PDU 64 or the junction box 65 on the basis of a stop signal from the charging stop switch 68 to cut off a charging path to the battery unit 51. Consequently, the operator can safely unplug the first cable CA1 from the first charging connector NT1. Thus, the hydraulic excavator 1 includes the charging stop switch 68 for releasing the lock that is applied when the first charging connector NT1 is connected to the first cable CA1.

A plurality of hydraulic pumps 71 are connected to a rotating shaft (output shaft) of the electric motor 61. The plurality of hydraulic pumps 71 include variable displacement pumps and fixed displacement pumps. FIG. 2 illustrates only the one hydraulic pump 71 as an example. Each hydraulic pump 71 is connected to an operating oil tank 74.

When the hydraulic pumps 71 are driven by the electric motor 61, operating oil in the operating oil tank 74 is supplied to the hydraulic actuator 73 via the control valve. Consequently, the hydraulic actuator 73 is driven. That is, the operating oil tank 74 houses the operating oil discharged by the hydraulic pumps 71 driven by the electric motor 61. The control valve 72 is a directional switching valve that controls the flow direction and the flow rate of the operating oil supplied to the hydraulic actuator 73. The hydraulic actuator 73 includes hydraulic motors (e.g., the left and right travel motors 22 and the turning motor 43 in FIG. 1) and hydraulic cylinders (e.g., the boom cylinder 31a, the arm cylinder 32a, and the bucket cylinder 33a in FIG. 1).

### 3. Placement of Parts in Machine Room

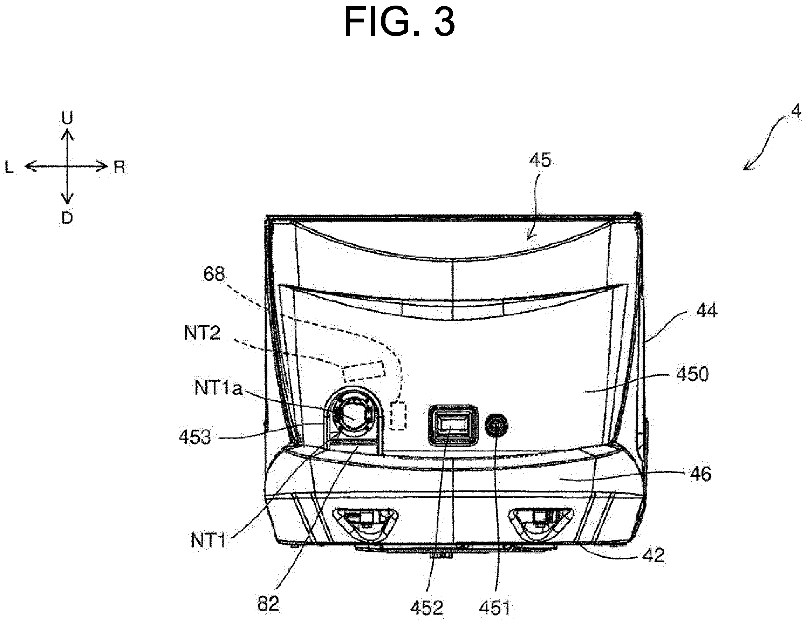

FIG. 3 is a rear view of the machine room 44 of the upper turning body 4. Side parts and a back part of the machine room 44 are covered with a bonnet. Herein, the bonnet located at the back part of the machine room 44 is referred to as a cover 45. The cover 45 is rotatably supported with the machine room 44 by using hinges, gas springs, and the like. In particular, the cover 45 is supported rotatably with upward opening by the machine room 44. The "upward opening" refers to a form in which the lower side of the cover opens with respect to the upper side of the cover. The opening form of the cover 45 is not limited to the upward opening, for example, but may be right opening or left opening.

At a back end of the hydraulic excavator 1, especially, at the back lower part of the machine room 44, a counterweight 46 is provided to balance the weight in the front-back direction with respect to the working machine 3. That is, the hydraulic excavator 1 includes the counterweight 46. The cover 45 is located above the counterweight 46 in a closed state.

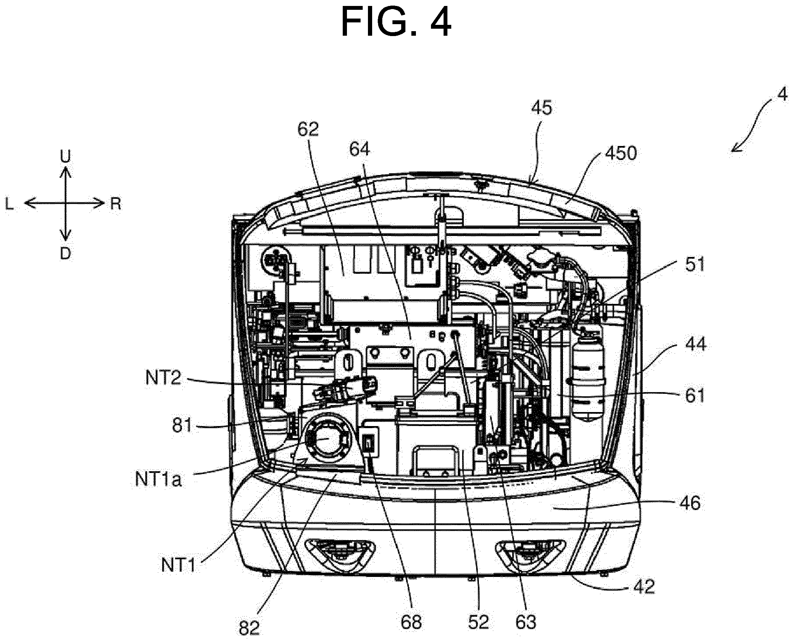

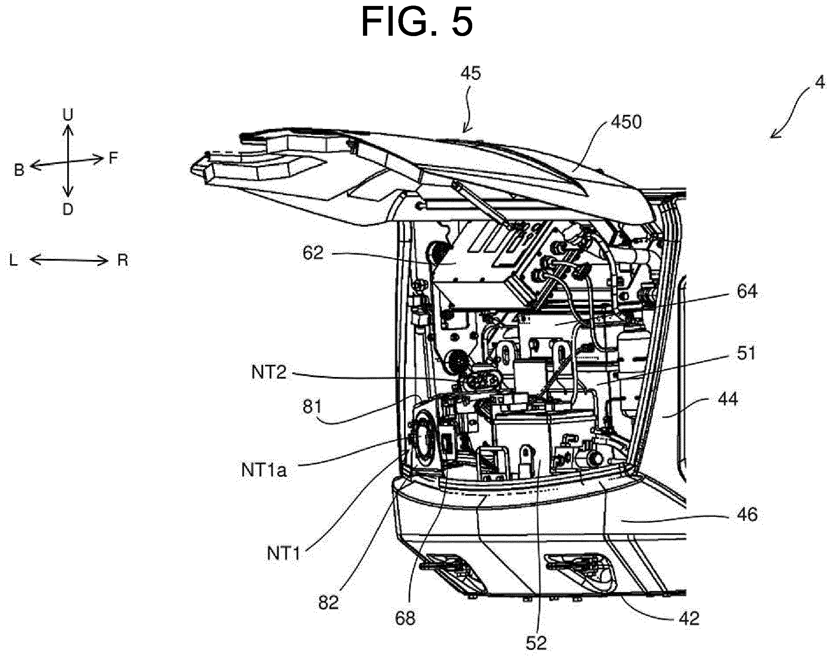

FIG. 4 and FIG. 5 are a rear view and a perspective view of the machine room 44 with the cover 45 open, respectively. The placement of main parts visible when the inside of the machine room 44 is viewed from the back will be briefly described below. The placement of each part described below is an example, and the placement is not limited to this placement.

Inside the machine room 44, the lead battery 52 is disposed at the center of the back. On the left side of the lead battery 52, the first charging connector NT1 and the charging stop switch 68 are disposed. The charging stop switch 68 is disposed side by side with the first charging connector NT1 in the left and right direction. That is, the charging stop switch 68 is disposed next to the first charging connector NT1. The first charging connector NT1 is disposed so as to face almost the back. A second charging connector NT2 is disposed above the first charging connector NT1. The second charging connector NT2 is disposed so as to face toward the upper right. In other words, the orientations of the first charging connector NT1 and the second charging connector NT2 are different from each other.

The first charging connector NT1, the charging stop switch 68, and the second charging connector NT2 are held in the same bracket 81. The bracket 81 also holds a rubber sheet 82 at the same time. The details of the bracket 81 and the rubber sheet 82 will be described later.

In the machine room 44, the battery unit 51 is disposed in front of the lead battery 52. The PDU 64 is disposed above battery unit 51. The normal charger 62 is disposed above the PDU 64. In addition, the inverter 63 is disposed on the right side of the battery unit 51. On the right front side of the inverter 63, the electric motor 61 is placed vertically, that is, an output shaft is disposed so as to extend in the up-down direction.

Thus, the hydraulic excavator 1 of this embodiment includes includes the machine room 44 that houses at least the battery unit 51, the first charging connector NT1, and the charging stop switch 68.

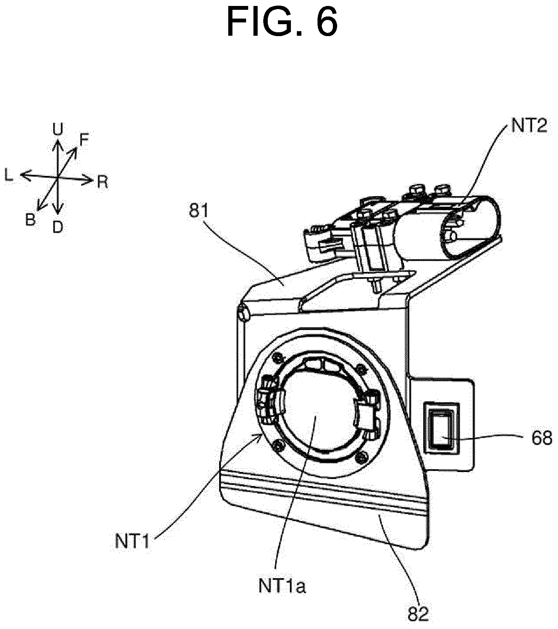

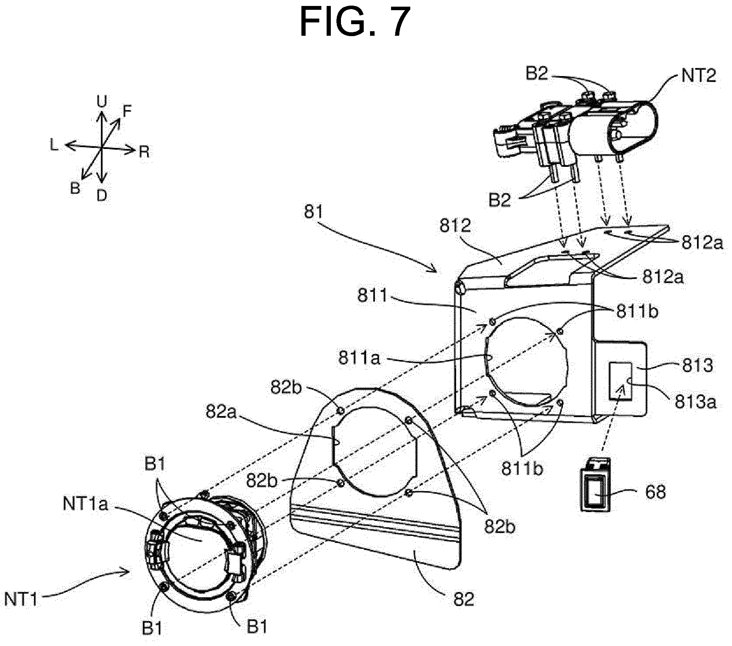

FIG. 6 is a perspective view illustrating the first charging connector NT1, the second charging connector NT2, the charging stop switch 68, and the rubber sheet 82 held together by the bracket 81. FIG. 7 is an exploded perspective view of the first charging connector NT1, the second charging connector NT2, the charging stop switch 68, the bracket 81, and the rubber sheet 82.

The bracket 81 is configured by bending a single flat metal plate. The bracket 81 may be configured by connecting a plurality of flat plates by welding or the like. The bracket 81 includes respective flat plates that constitute a first connector mounting part 811, a second connector mounting part 812, and a switch mounting part 813. That is, the bracket 81 has the first connector mounting part 811, the second connector mounting part 812, and the switch mounting part 813. The second connector mounting part 812 is connected to an upper end of the first connector mounting part 811. The switch mounting part 813 is connected to a right end of the first connector mounting part 811.

The first connector mounting part 811 has a bracket side insertion hole 811a into which the first charging connector NT1 is inserted. Further, the first connector mounting part 811 has a plurality of (for example, four) first through holes 811b around the bracket side insertion hole 811a. First bolts B1 for fastening the first the charging connector NT1 are inserted into the first through holes 811b.

The second connector mounting part 812 has a plurality of (for example, four) second through holes 812a. Second bolts B2 for fastening the second charging connector NT2 is inserted into the second through holes 812a.

The switch mounting part 813 has a switch fitting hole 813a. The charging stop switch 68 is fixed and held in the switch mounting part 813 by being fitted into the switch fitting hole 813a.

The rubber sheet 82 has a sheet side through hole 82a into which the first charging connector NT1 is inserted. Further, the rubber sheet 82 has a plurality (for example, four) of third through holes 82b around the sheet side through hole 82a. The first bolts B1 for fastening first charging connector NT1 are inserted into the third through holes 82b.

The first charging connector NT1 is inserted into the sheet side through hole 82a of the rubber sheet 82 and the bracket side insertion hole 811a of the first connector mounting part 811. At the same time, the first bolts B1 are inserted into mounting holes (not illustrated) of the first charging connector NT1, the third through holes 82b of the rubber sheet 82, and the first through holes 811b of the first connector mounting part 811 in order, and the first bolts B1 engage with nuts (not illustrated) located on the side opposite to the rubber sheet 82 with respect to the first connector mounting part 811. Consequently, the first charging connector NT1 is fixed and held on the the bracket 81 (especially, the first connector mounting part 811) together with the rubber sheet 82.

In addition, the second bolts B2 are inserted into mounting holes (not illustrated) of the second charging connector NT2, and the second through holes 812a of the second connector mounting part 812 in order, and the second bolts B2 engage with nuts (not illustrated) located on the side opposite to the second charging connector NT2 with respect to the second connector mounting part 812. Consequently, the second charging connector NT2 is fixed and held by the bracket 81 (especially, the second connector mounting part 812).

The rubber sheet 82 has such a shape (size) as to protrude downward from the first connector mounting part 811 in a state in which the rubber sheet is held by the first connector mounting part 811. Therefore, when a charging cable passes below bracket 81 (especially, the first connector mounting part 811), the charging cable can pass by turning over (elastically deforming) a lower end of the rubber sheet 82. In addition, the rubber sheet 82 is held by the bracket 81 such that the rubber sheet is suspended inside a cutout part 453 (see FIG. 3 and the like) described later in a state in which the cover 45 is closed.

### 4. Cover

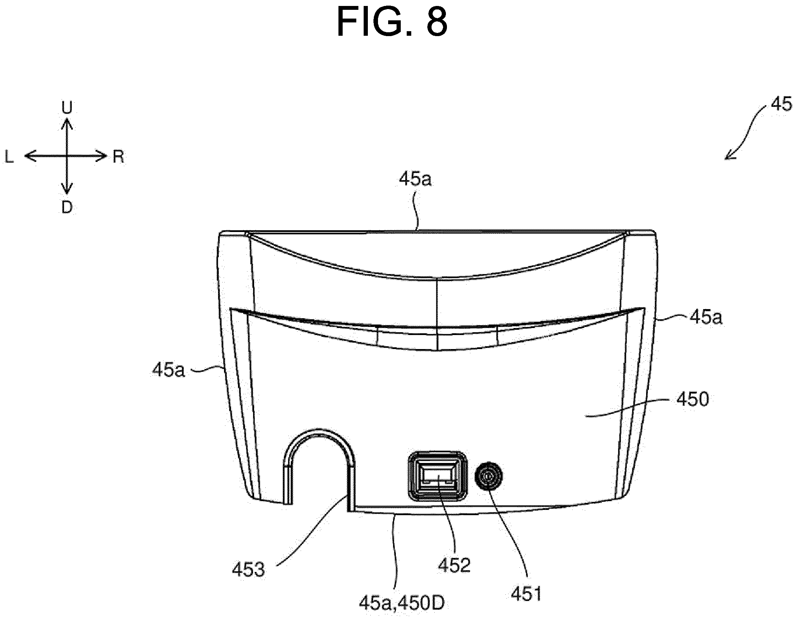

Now, the cover 45 described above will be described in more detail. FIG. 8 is a rear view of the cover seen from the rear of a machine body. The cover 45 includes a metal cover main body 450. The cover main body 450 constitutes a back wall of the machine room 44 (see FIG. 3 and the like), and is supported rotatably (openably and closably) with upward opening by the machine room 44. The cover main body 450 covers the back of the machine room 44 from the rear side of the machine body in the closed state. The cover main body 450 is provided with a key cylinder 451, a holding part 452, and the cutout part 453.

The key cylinder 451 is provided above a lower edge 450D of the cover main body 450 and on the right side with respect to the center in the left and right direction. A key is inserted into the key cylinder 451 to lock and unlock the cover 45. For example, a worker such as an operator inserts a key into the key cylinder 451 and turns the key in one direction (for example, counterclockwise), so that the cover 45 is locked to the machine room 44. In this case, the worker cannot open the cover 45, and the cover 45 remains closed. On the other hand, the worker inserts the key into the key cylinder 451 and turns the key in the opposite direction (for example, clockwise), so that the lock of the cover 45 to the machine room 44 is unlocked. Consequently, the worker can open the cover 45.

The holding part 452 is provided side by side with the key cylinder 451 above the lower edge 450D of the cover main body 450, near the center in the left and right direction. The holding part 452 is a handle that is gripped by the worker when the cover main body 450 is opened and closed.

The cutout part 453 is located on the left side of the holding part 452 in the cover main body 450. The cutout part 453 is formed by cutting out a portion of an edge 45a of the cover 45 (cover main body 450). In other words, the cutout part 453 opens a portion of the edge 45a of the cover 45. For example, in a configuration in which the cover 45 is rotatably supported by the machine room 44, the cutout part 453 opens a portion of the edge 45a on the side (for example, the lower side) opposite to the supporting side (for example, the upper side) of the machine room 44 in one direction (for example, the up-down direction) of the cover 45. In particular, in a configuration in which the cover 45 is supported rotatably with upward opening by the machine room 44 as in this embodiment, the cutout part 453 opens a portion of the lower edge 450D of the cover 45. Thus, the hydraulic excavator 1 of this embodiment has the cutout part 453 and includes the cover 45 that can be opened and closed with respect to the machine room 44. The above-mentioned positional relationship of the key cylinder 451, the holding part 452, and the cutout part 453 in the cover main body 450 is an example, and can be changed as appropriate.

In this embodiment, as illustrated in FIG. 3, the cover 45 exposes the first charging connector NT1 to the outside through the cutout part 453 while covering the charging stop switch 68 in a lockably closed state. In such a configuration of this cover 45, during charging of the battery unit 51, the worker can plug and unplug the cable to the connector as follows.

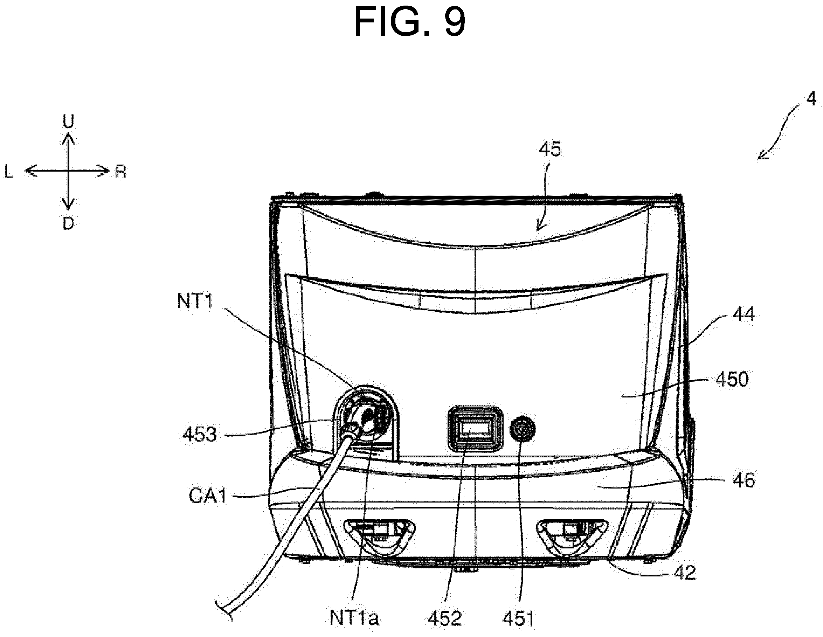

When charging normally, in a state in which the cover 45 is closed and locked, the worker opens a lid part NTla of the first charging connector NT1 exposed from the cutout part 453, and connects the first cable CA1 to a connection port of the first charging connector NT1, as illustrated in FIG. 9. Consequently, normal charging is started.

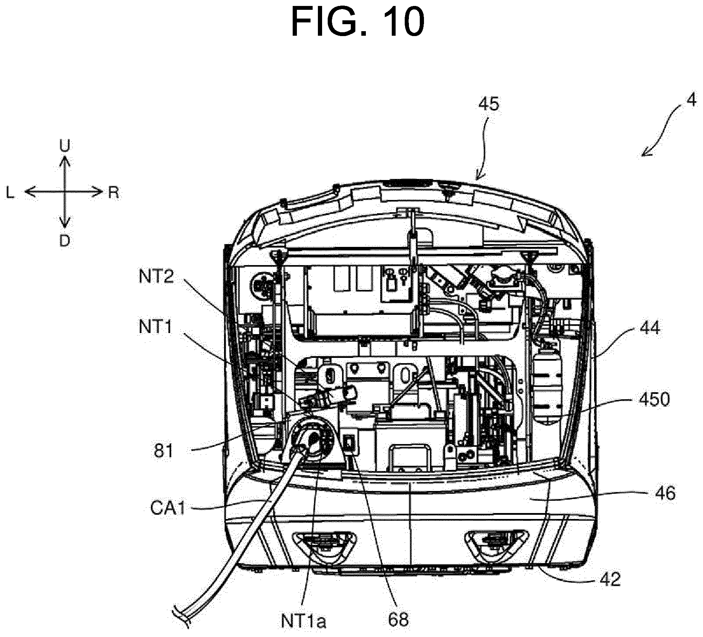

After the normal charging is finished, or when the normal charging is to be stopped midway for some reason, the worker unlocks and opens the cover 45 and presses the charging stop switch 68, as illustrated in FIG. 10. Consequently, the interlock of the first charging connector NT1 is released, and therefore the worker can unplug the first cable CA1 from the first charging connector NT1. The worker then closes the cover 45.

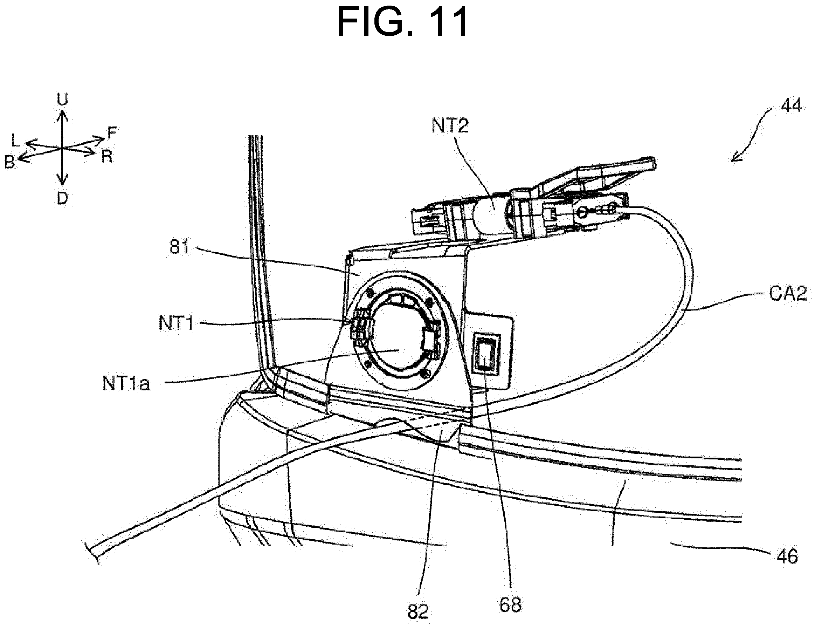

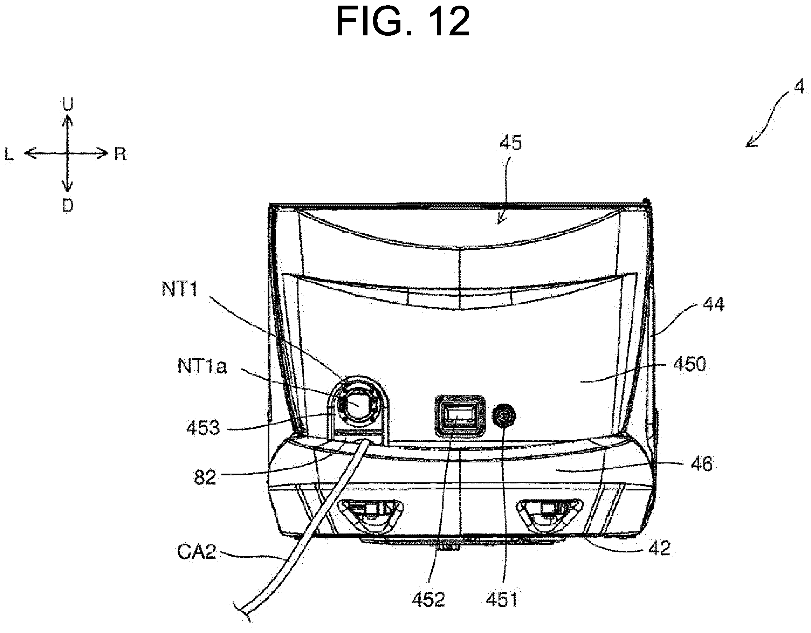

On the other hand, when performing quick charging, the worker unlocks and opens the cover 45 from the state illustrated in FIG. 3. Then, as illustrated in FIG. 11, the worker connects the second cable CA2 to the second charging connector NT2. Consequently, quick charging is started. At this time, the worker passes the second cable CA2 connected to the second charging connector NT2 below the bracket 81, that is, passes between the bracket 81 and the counterweight 46, and turns over the lower end of the rubber sheet 82 to position the second cable. In this state, when the worker closes and locks the cover 45, the cover is in the state illustrated in FIG. 12.

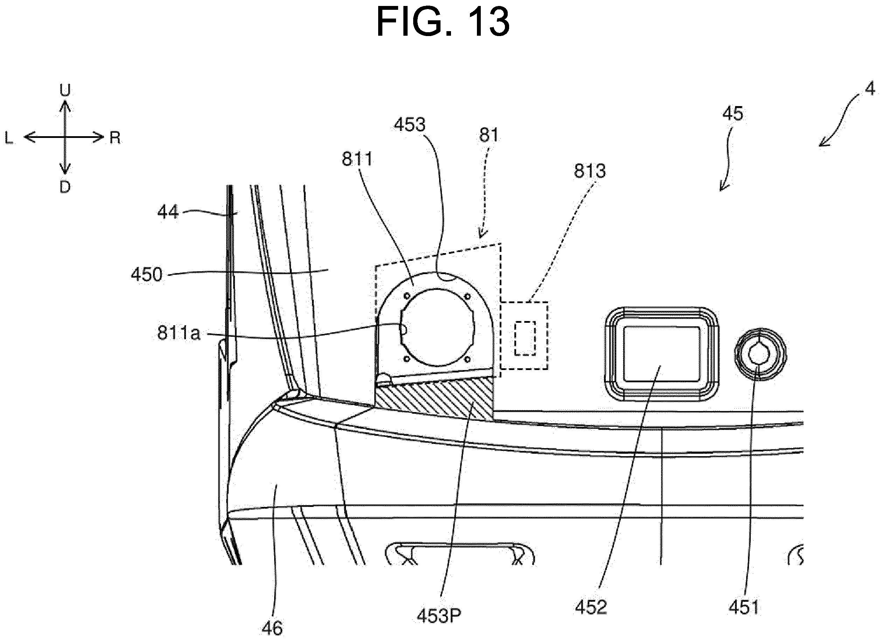

FIG. 13 is a rear view of the cover 45 in the closed state, in a state in which the rubber sheet 82 and the first charging connector NT1 are not illustrated. As illustrated in the figure, the cutout part 453 of the cover 45 has an opening area 453P. The opening area 453P is an area located outside the bracket 81 among an area cut out by the cutout part 453 when the cover 45 is closed and viewed from the back side of the machine body, that is, an area that does not overlap with the bracket 81. As illustrated in FIG. 11, when the second cable CA2 is connected to the second charging connector NT2, the second cable CA2 passes through the opening area 453P while avoiding the bracket 81 in a state in which the cover 45 is lockably closed.

After completing the quick charging, or when stopping the quick charging midway for some reason, the worker unlocks and opens the cover 45. Consequently, the worker can unplug the second cable CA2 from the second charging connector NT2. The worker then closes the cover 45.

In the hydraulic excavator 1 of this embodiment described above, in the state in which the cover 45 is closed with respect to the machine room 44, the first charging connector NT1 is exposed to the outside via the cutout part 453 of the cover 45, as illustrated in FIG. 3. Consequently, as illustrated in FIG. 9, the first cable CA1 is connected to the first charging connector NT1 with the cover 45 closed, so that the battery unit 51 can be charged (normally charged). In other words, the battery unit 51 can be charged without opening the cover 45.

Furthermore, in the state in which the cover 45 is lockably closed, the charging stop switch 68 is covered with the cover 45. Therefore, the charging stop switch 68 cannot be operated externally, and the first cable CA1 cannot be unplugged from the first charging connector NT1. To unplug the first cable CA1 from the first charging connector NT1, it is necessary to unlock and open the cover 45, and operate the charging stop switch 68.

In order to open the cover 45, it is necessary to unlock the cover, and therefore a third party who does not have an unlocking key cannot open the cover 45. Therefore, it is possible to reduce a risk that the first cable CA1 may be unplugged by a third party without the knowledge of a worker after charging is finished or during charging. Furthermore, the above effects can be obtained with a simple structure in which the cover 45 covers the charging stop switch 68 in the closed state.

To enable a worker to intuitively operate the charging stop switch 68 when unplugging the first cable CA1 from the first charging connector NT1, the charging stop switch 68 is desirably located near the first charging connector NT1. From this point of view, as illustrated in FIG. 4, FIG. 6 and the like, it is desirable that the charging stop switch 68 is disposed next to the first charging connector NT1. In addition, when the charging stop switch 68 is disposed next to the first charging connector NT1, a worker can easily recognize that the charging stop switch 68 is a switch for stopping normal charging using the first charging connector NT1. In other words, it becomes difficult for a worker to misunderstand that the charging stop switch 68 is a switch for stopping quick charging using, for example, the second charging connector NT2.

In this embodiment, an example in which the charging stop switch 68 is disposed next to the right of the first charging connector NT1 is described, but the charging stop switch 68 may be disposed next to the left of the first charging connector NT1. In addition, the charging stop switch 68 may be disposed side by side above or below the first charging connector NT1, as long as the charging stop switch 68 does not interfere with the cable routing.

As illustrated in FIG. 10, when the cover 45 is opened in a state in which the first cable CA1 is connected to the first charging connector NT1, the first cable CA1 relatively crosses an opening portion of the cutout part 453 of the cover 45, and exits from the inside of the cutout part. Consequently, the first cable CA1 does not obstruct the opening motion of the cover 45. That is, the cover 45 can be opened even when the first cable CA1 is connected to the first charging connector NT1. Thus, from a point of view of ensuring motion that the first cable CA1 exits relatively across the cutout part 453 when the cover 45 is opened, the cutout part 453 desirably opens a portion of the edge 45a of the cover 45, more specifically, a portion of the edge 45a on the side opposite to the supporting side of the machine room 44 on the one direction (up-down direction) 45 of the cover, as illustrated in FIG. 8.

In particular, in a configuration in which the cover 45 is supported rotatably with upward opening by the machine room 44 as in this embodiment, to ensure the first cable CA1 to exit relatively across the cutout part 453 when the cover 45 is opened upward, the following configuration is desirable. In other words, it is desirable that the cutout part 453 opens a portion of the lower edge 450D of the cover 45.

When the cover 45 opens to the left or right side with respect to the machine room 44, the cutout part 453 may open a portion of the edge 45a on the left or right side of the cover 45. More specifically, when the cover 45 opens to the left with respect to the machine room 44, the cutout part 453 may open a portion of the edge 45a on the left side of the cover 45. Conversely, when the cover 45 opens to the right with respect to the machine room 44, the cutout part 453 may open a portion of the edge 45a on the right side of the cover 45.

As in this embodiment, in a configuration in which the counterweight 46 is disposed at the back end of the hydraulic excavator 1, from a point of view of ensuring the above-described opening and closing of the cover 45, and reliably ensuring a configuration in which the first charging connector NT1 is exposed in the state in which the cover 45 is closed, the following configuration is desirable. That is, it is desirable that the counterweight 46 is disposed below the cover 45 and the first charging connector NT1 in a state in which the cover 45 is closed.

As illustrated in FIG. 4 and the like, the hydraulic excavator 1 of this embodiment includes the second charging connector NT2 for quick charging, and the bracket 81 in addition to the first charging connector NT1 for normal charging. As illustrated in FIG. 3, the second charging connector NT2 is disposed at a position offset from the cutout part 453 inside the machine room 44 (as viewed from the rear side (machine body back side)) in the state in which the cover 45 is closed. The second cable CA2 for charging the battery unit 51 is connected to the second charging connector NT2. The bracket 81 is installed in the machine room 44 to hold the first charging connector NT1, as illustrated in FIG. 5 and FIG. 6.

As illustrated in FIG. 11 to FIG. 13, when the second cable CA2 is connected to the second charging connector NT2, the second cable CA2 passes through the opening area 453P of the cutout part 453 while avoiding the bracket 81 in the state in which the cover 45 is lockably closed. Consequently, the second cable CA2 connected to the second charging connector NT2 can be pulled out to the outside of the machine body through the opening area 453P and connected to the external quick charger 202 (see FIG. 2). That is, the battery unit 51 can be quickly charged with the cover 45 closed. In addition, the cover 45 can be locked in the closed state, and therefore after the cover 45 is closed and locked as illustrated in FIG. 12, a third party who does not have an unlocking key cannot open the cover 45. Therefore, the risk that a third party unplugs the second cable CA2 connected to the second charging connector NT2 after quick charging is finished or during charging is also reduced.

As illustrated in FIG. 3 to FIG. 5, the second charging connector NT2 is disposed above the first charging connector NT1. In this placement, in the state in which the cover 45 is closed, a layout in which the first charging connector NT1 is exposed from the cutout part 453 while the second charging connector NT2 is covered by the cover 45 is realized. With this layout, in the state in which the cover 45 is closed, a connection part between the second charging connector NT2 and the second cable CA2 can also be covered with the cover 45. In this case, when the cover 45 is closed, it is not possible to release connection between the second charging connector NT2 and the second cable CA2. Therefore, when the connection between the second charging connector NT2 and the second cable CA2 is released, there is no need to adopt a configuration in which an interlock release switch is provided (a configuration in which the connection cannot be released without operating the release switch). That is, even when the interlock release switch mentioned above is not provided, the risk that a third party easily unplug the second cable CA2 from the second charging connector NT2 is reduced by the configuration of closing the cover 45.

Additionally, from a point of view of reliably obtaining this effect, as illustrated in FIG. 3, it is desirable that the cover 45 covers the second charging connector NT2 in the closed state.

In order to enable routing of the second cable CA2 that passes through the opening area 453P of the cutout part 453 while avoiding the bracket 81 in the state in which the cover 45 is closed, the following configuration is desirable. In other words, as illustrated in FIG. 13, in the state in which the cover 45 is closed, the opening area 453P of the cutout part 453 is desirably located between the bracket 81 and the counterweight 46.

From a point of view that the first charging connector NT1, the charging stop switch 68, and the second charging connector NT2 are disposed together and electrical components used during charging are disposed together in a compact, the following configuration is desirable. That is, as illustrated in FIG. 6, it is desirable that the bracket 81 further holds the second charging connector NT2 and the charging stop switch 68 in addition to the first charging connector NT1.

From a point of view that the intrusion of rainwater or dust from the cutout part 453 into the machine room 44 is suppressed with a simple structure, the hydraulic excavator 1 desirably further includes the rubber sheet 82 which is suspended from the bracket 81 into the cutout part 453 in the state in which the cover 45 is closed.

In addition, the elastic rubber sheet 82 is suspended inside the cutout part 453, so that the second cable CA2 can turn over the lower end of the rubber sheet 82 when the second cable CA2 passes through the opening area 453P of the cutout part 453. Consequently, even in the state in which the cover 45 is closed, the second cable CA2 connected to the second charging connector NT2 can be pulled out to the outside through the cutout part 453 (especially, the opening area 453P). Therefore, from a point of view that while the intrusion of rainwater or the like into the machine room 44 is suppressed by the rubber sheet 82, routing of the second cable CA2 and quick charging are enabled, and the second cable CA2 is also prevented from being unplugged during quick charging, the following configuration is desirable. That is, it is desirable that the second cable CA2 connected to the second charging connector NT2 is pulled out to the outside through the cutout part 453 in the state in which the cover 45 is closed.

### 5. Supplement

In the above description, the hydraulic excavator 1 which is a construction machine is described as an example of an electric working machine. However, the working machine is not limited to the hydraulic excavator 1, but may also be other construction machine such as a wheel loader and a compact truck loader. Further, the working machine may be an agricultural machine such as a combine and a tractor.

### 6. Appendices

The working machine described in this embodiment can also be expressed as the following appendices.

A working machine of Appendix (1) is a working machine that uses electric power of a battery unit as a driving source, and includes: a charging connector to which a cable for charging the battery unit is to be connected; a switch for releasing lock applied when the charging connector is connected to the cable; a machine room that houses the battery unit, the charging connector, and the switch; and a cover that has a cutout part, and is openable and closable with respect to the machine room, wherein the cover exposes the charging connector to outside through the cutout part while covering the switch in a lockably closed state.

According to a working machine of Appendix (2), in the working machine mentioned in Appendix (1), the switch is disposed next to the charging connector.

According to a working machine of Appendix (3), in the working machine mentioned in Appendix (1) or (2), the cutout part opens a portion of an edge of the cover.

According to a working machine of Appendix (4), in the working machine mentioned in Appendix (3), the cover is rotatably supported by the machine room, and the cutout part opens a portion of the edge on a side opposite to a side supported by the machine room in one direction of the cover.

According to a working machine of Appendix (5), in the working machine mentioned in Appendix (3) or (4), the cover is supported rotatably with upward opening by the machine room, and the cutout part opens a portion of a lower edge of the cover.

According to working machine of Appendix (6), in the working machine mentioned in Appendix (5), the working machine further includes a counterweight disposed at a back end of the working machine, wherein the counterweight is disposed below the cover and the charging connector in a state in which the cover is closed.

According to a working machine of Appendix (7), in the working machine mentioned in Appendix (6), when the charging connector is defined as a first charging connector, and the cable is defined as a first cable, the working machine further includes: a second charging connector, which is disposed at a position offset from the cutout part inside the machine room in the state in which the cover is closed, and to which a second cable for charging the battery unit is to be connected; and a bracket that is installed inside the machine room and holds the first charging connector, wherein the cutout part has an opening area through which the second cable passes while avoiding the bracket in the lockably closed state of the cover when the second cable is connected to the second charging connector.

According to a working machine of Appendix (8), in the working machine mentioned in Appendix (7), the second charging connector is disposed above the first charging connector.

According to a working machine of Appendix (9) in the working machine mentioned in Appendix (8), the cover covers the second charging connector in the closed state.

According to a working machine of Appendix (10), in the working machine mentioned in any one of Appendices (7) to (9), the opening area of the cutout part is located between the bracket and the counterweight in the state in which the cover is closed.

According to a working machine of Appendix (11), in the working machine mentioned in any one of Appendices (7) to (10), the bracket further holds the second charging connector and the switch.

According to a working machine of Appendix (12), in the working machine mentioned in any one of Appendices (7) to (11), the working machine further includes a rubber sheet suspended from the bracket into the cutout part in the state in which the cover is closed.

According to a working machine of Appendix (13) is a working machine that uses electric power of a battery unit as a driving source, and includes: a connector for quick charging (second charging connector) to which a cable for quick charging (second cable) for quickly charging the battery unit is to be connected; a machine room that houses the battery unit, and the connector for quick charging; and a cover that is openable and closable with respect to the machine room, wherein the cover has a cutout part that allows the cable for quick charging to pass while covering the connector for quick charging in a lockably closed state.

According to a working machine of Appendix (14), in the working machine mentioned in Appendix (13), the working machine further includes a bracket that is installed inside the machine room and holds the connector for quick charging, and when the cable for quick charging is connected to the connector for quick charging, the cutout part has an opening area through which the cable for quick charging passes while avoiding the bracket in the lockably closed state of the cover.

Although the embodiments of the present invention have been described above, the scope of the present invention is not limited thereto, and can be expanded or modified without departing from the gist of the invention.

### INDUSTRIAL APPLICABILITY

The present invention can be used for a working machine such as a construction machine and an agricultural machine, for example.

### REFERENCE SIGNS LIST

1 hydraulic excavator (working machine)
44 machine room
45 cover
45a edge
46 counterweight
51 battery unit
68 charging stop switch
81 bracket
82 rubber sheet
450D lower edge
453 cutout part
453P opening area
CA1 first cable (cable)
CA2 second cable
NT1 first charging connector (charging connector)
NT2 second charging connector

## Claims

1. A working machine using electric power of a battery unit as a driving source, the working machine comprising:
a charging connector to which a cable for charging the battery unit is to be connected;
a switch for releasing lock applied when the charging connector is connected to the cable;
a machine room that houses the battery unit, the charging connector, and the switch; and
a cover that has a cutout part, and is openable and closable with respect to the machine room, wherein
the cover exposes the charging connector to outside through the cutout part while covering the switch in a lockably closed state.

2. The working machine according to claim 1, wherein
the switch is disposed next to the charging connector.

3. The working machine according to claim 1 or 2, wherein
the cutout part opens a portion of an edge of the cover.

4. The working machine according to claim 3, wherein
the cover is rotatably supported by the machine room, and
the cutout part opens a portion of the edge on a side opposite to a side supported by the machine room in one direction of the cover.

5. The working machine according to claim 3 or 4, wherein
the cover is supported rotatably with upward opening by the machine room, and
the cutout part opens a portion of a lower edge of the cover.

6. The working machine according to claim 5, further comprising
a counterweight disposed at a back end of the working machine, wherein
the counterweight is disposed below the cover and the charging connector in a state in which the cover is closed.

7. The working machine according to claim 6, wherein
when the charging connector is defined as a first charging connector, and the cable is defined as a first cable,
the working machine further comprising:
a second charging connector, which is disposed at a position offset from the cutout part inside the machine room in the state in which the cover is closed, and to which a second cable for charging the battery unit is to be connected; and
a bracket that is installed inside the machine room and holds the first charging connector, wherein
the cutout part has an opening area through which the second cable passes while avoiding the bracket in the lockably closed state of the cover when the second cable is connected to the second charging connector.

8. The working machine according to claim 7, wherein
the second charging connector is disposed above the first charging connector.

9. The working machine according to claim 8, wherein
the cover covers the second charging connector in the closed state.

10. The working machine according to any one of claims 7 to 9, wherein
the opening area of the cutout part is located between the bracket and the counterweight in the state in which the cover is closed.

11. The working machine according to any one of claims 7 to 10, wherein
the bracket further holds the second charging connector and the switch.

12. The working machine according to any one of claims 7 to 11, further comprising
a rubber sheet suspended from the bracket into the cutout part in the state in which the cover is closed.
